# EUROPEAN PATENT SPECIFICATION

(11) **EP 4 223 385 B1**
(45) Date of publication and mention of the grant of the patent: **08.10.2025**
(21) Application number: 22155317.5
(22) Date of filing: 07.02.2022
(51) Int. Cl.: B01D 46/00, B01D 46/12, B01D 46/52, B01D 46/10, B01D 46/58

(54) **OUTDOOR AIR PURIFIER COMPRISING AT LEAST ONE FILTER ELEMENT AND USE OF A FILTER ELEMENT**
LUFTREINIGER FÜR DEN AUSSENBEREICH MIT MINDESTENS EINEM FILTERELEMENT UND VERWENDUNG EINES FILTERELEMENTS
PURIFICATEUR D'AIR EXTÉRIEUR COMPRENANT AU MOINS UN ÉLÉMENT DE FILTRE ET UTILISATION D'UN ÉLÉMENT DE FILTRE

(43) Date of publication of application: 09.08.2023
(73) Proprietor: MANN+HUMMEL GmbH, 71636 Ludwigsburg (DE)
(72) Inventor: ALAGOUDA, Bharatesh, 591201 Chikkodi (IN); CHOWALLOOR RAPHEAL, Antomon, 560058 Bangalore (IN); MÜLLER, Dr. Thilo, 71277 Rutesheim (DE); SHRIMALI, Mayank, 560072 Bangalore (IN)
(74) Representative: Mann + Hummel Intellectual Property

(56) References cited:
- EP-A1- 3 708 916
- DE-A1- 10 111 318
- DE-A1- 102017 007 325
- KR-A- 20050 068 045
- KR-A- 20060 026 320

## Description

### Technical Field

The invention relates to an ambient air purifier comprising at least one filter element and use of a filter element in a vehicle mountable ambient air purifier.

### Prior Art

Particle filter systems such as fine dust filter systems known in the art use direct flow alignments with axial fans in vertical position and filter elements positioned in upstream position from said fan. The height of these systems is typically determined by the diameter of the fan.

JP5679796 B2 discloses an air conditioner for a vehicle for removing particles from air. Purified air is exhausted from the air conditioner into the vehicle while particles are maintained in the air conditioner.

EP3708916 A1 discloses a room air purifier including a body having a frame at least partially defining an interior chamber and an opening to the interior chamber. The room air purifier further includes a purification mechanism in the interior chamber in fluid communication through the frame with an exterior of the body, the purification mechanism including at least one filter and at least one blower.

KR20060026320 A discloses an air cleaner detachably installed in a main body at a front of a filter and including a suction guide unit having an air suction port and a suction flow path. In addition, the suction guide unit is opened toward the filter, and the air suction port is formed on an outer surface of the suction guide unit forming a side of the main body so that the suction flow path is formed between the air suction port and the filter.

KR20050068045 A discloses an air purifier including a cleaning filter assembly and a replacement filter assembly that are coupled to a slide groove formed on one side of a main body. The cleaning filter assembly includes a filter frame, a dust collecting filter, a deodorizing filter, and a sterilizing filter.

### Disclosure of the Invention

It is an object of the invention to provide an ambient air purifier which allows for a compact and light-weighted design.

Another object of the invention is to provide a use of a filter element in an ambient air purifier.

The first object is achieved by an ambient air purifier, comprising a housing comprising at least a housing cover and a mounting base, wherein the housing has at least one flow inlet for ambient air to be purified and at least one flow outlet for cleaned air,
a fan, at least one filter element, wherein the at least one filter element extends essentially parallel to the rotational axis of the fan, wherein the at least one filter element includes at least one filter medium body, in particular configured as a pleated filter bellows, wherein at least a first lateral frame element, in particular a plane lateral frame element, is provided on at least an upper front end of the at least one filter medium body, having a larger cross section than the upper front end and protruding beyond the upper front end of the filter medium body with a protruding segment, wherein the protruding segment of the lateral frame element provides a sealing area between the filter element and the housing exterior to the upper front end and is pinched between a support structure of the mounting base and a counterpart element of the housing cover when the housing is in a closed state.

Another object is achieved by use of a filter element in a vehicle mountable ambient air purifier according to any one of the preceding claims, for purifying ambient air, the filter element including at least one filter medium body, in particular provided in the form of a pleated filter bellows, wherein at least a first lateral frame element, in particular a plane lateral frame element, is provided on at least an upper front end of the filter element, having a larger cross section than the upper front end and protruding beyond the upper front end of the filter medium body with a protruding segment, wherein the protruding segment of the lateral frame element provides a sealing area exterior to the at least upper front end.

Favorable embodiments and advantages of the invention are apparent from the further claims, the description and the drawings.

In a first aspect of the invention an ambient air purifier is proposed, comprising a housing comprising at least a housing cover and a mounting base, wherein the housing has at least one flow inlet for ambient air to be purified and at least one flow outlet for cleaned air, a fan arranged within the housing, at least one filter element wherein the at least one filter element includes at least one filter medium body, in particular configured as a pleated filter bellows. At least a first lateral frame element, in particular a plane lateral frame element, is provided on at least an upper front end of the at least one filter medium body, having a larger cross section than the upper front end and protruding beyond the upper front end of the filter medium body with a protruding segment, wherein the protruding segment of the lateral frame element provides a sealing area between the filter element and the housing exterior to the upper front end and is pinched between a support structure of the mounting base and a counterpart element of the housing cover when the housing is in a closed state.

The filter element of the proposed ambient air purifier has a protruding lateral frame element on its upper side that is wider than the width of the filter medium body. The protruding lateral frame element in an installed position is compressed between the mounting base and the housing cover. Thus, an effective sealing can be achieved while ensuring that the filter medium body is not loaded with sealing forces. The force flow only goes from the housing cover through the protruding lateral frame element to the mounting base. Beneficially with this specific sealing interface and sealing forces being kept away from the filter medium body mechanical damage to the filter medium body can be avoided.

A lateral frame element of a pleat pack that runs perpendicular to the longitudinal extension of the pleats of the filter element is usually called a sideband, and a lateral frame element of a pleat pack that runs parallel to the longitudinal extension of the pleats is usually called a headband. In a preferred embodiment the longitudinal extension of the pleats runs along a vertical axis in a standing orientation so that the lateral frame element taking part in the sealing interface preferably is a sideband.

In the proposed ambient air purifier filter element segments of the filter elements may be inserted into prisma-shaped slots of the mounting base from the top. The filter elements feature headbands and sidebands and e.g. use nonwoven filter media for their filter medium bodies. These filter elements are longer and wider than typical cabin air filter elements and feature thin media with low stiffness. This makes them sensitive to deformation when forces are acting on the filter medium body. However, these filter elements have high filtration efficiency (ePM1 greater than 60%), meaning that excessive leakage around the element would significantly reduce said efficiency. Challenges in that regard come from the size and the production process of the housing, as slight warp in the housing over lifetime and the non-controllability of material thickness in the intended roto-molding process require a fair amount of tolerance compensation. The elements hence need a sealing approach that does not deform the elements, but reduces the forces acting on the filter medium body.

At the filter bellows ends, V or L-latches can be attached to the headband of the filter element to reduce the leakage at the lateral sides of the slots. At the top of the slot a rigid or compressible sideband as a first lateral frame element can be used. The sideband facing the housing top cover has an excessive width thus creating an overlap in the form of a lip. At the lip, the mounting base and the housing cover pinch the sideband circumferentially. This seals the top of the slot and safely fixes the filter element in place allowing it to withstand mechanical forces, e.g. flow forces or vibrational forces. Due to the axial forces acting only on the lip, mechanical deformation of the filter medium body is thwarted.

The air purifier has a low height and a low power consumption as well as a low pressure drop between flow inlet and flow outlet. Fans may face upwards or downwards thus implying the redirection of the air by up to 90°. This allows for simple servicing options when filter elements have to be exchanged. In addition, high versatility in terms of element shapes, filter classes and two stage options such as main filter element and prefilter element are possible.

The low power consumption allows to aggregate higher flow rates, e.g., on bus roofs, and lowers the bar for application on smaller vehicles with smaller batteries and weaker alternators, such as forklifts, tricycles, production machinery, airport carriers and the like.

For small vehicles, a dedicated air flow direction may also be advantageous, as the driver will not be exposed to a strong draft which may be created by the air purifier.

Advantageously no polyurethane (PU) or sealing foam is needed for sealing the filter elements. Tolerance compensation may be beneficially achieved by the proposed sealing concept. Thus, tightness of the ambient air purifier may be guaranteed. Also, movement of the filter element under vibration due to mechanical fixation of at least one sideband may be reduced or avoided.

According to a favorable embodiment of the ambient air purifier, the fan may have a standing rotational axis. The at least one flow inlet may be arranged radially with regards to the rotational axis of the fan. The at least one outlet may be arranged axially with regards to the rotational axis of the fan. Advantageously, the air purifier has a low height and a low power consumption as well as a low pressure drop between flow inlet and flow outlet. Fans may face upwards or downwards thus implying the redirection of the air by up to 90°. This allows for simple servicing options when filter elements have to be exchanged. In addition, high versatility in terms of element shapes, filter classes and two stage options such as main filter element and prefilter element are possible.

The low power consumption allows to aggregate higher flow rates, e.g., on bus roofs, and lowers the bar for application on smaller vehicles with smaller batteries and weaker alternators, such as forklifts, tricycles, production machinery, airport carriers and the like.

A fan may be used that is larger than the system height. Advantageously, by tilting the fan, preferably by 90°, from the vertical, the fan may be facing upwards or downwards. Due to the limited system height, it may be further advantageous to arrange the filter elements around the fan to increase the flow cross-section, i.e. the filter cross-section, which correlates with lower achievable filter element and filter system pressure loss.

Weight and height are two critical aspects of rooftop carried fine dust filters. Advantageously the proposed sealing approach for fine dust filter elements of an ambient air purifier may contribute to both aspects. The sealing has only little impact on the usable cross-section for filtration and adds only little to the height of the filter system. It allows to use very light nonwoven elements.

According to a favorable embodiment of the ambient air purifier, the at least one filter element may at least partially surround, in particular circumferentially, an inner clean air space of the housing, wherein preferably the fan may be displaced axially from the mounting base of the housing and may be in fluid connection with the inner clean air space and/or the at least one filter element may extend essentially parallel to the rotational axis of the fan. Arranging one or more elements around the fan allows to increase the flow cross-section, i.e. the filter cross-section, which correlates with lower achievable filter element and filter system pressure loss, even for a limited system height. Pressure loss in the air purifier is mainly governed by the pressure loss of the filter element. Considering a given fan, a lower pressure drop allows to reduce the fan rotational speed, which leads to reduced power consumption and a reduction of the noise emissions. A concentric arrangement may be furthermore advantageous because it leads to a circular clean air space that allows for a homogeneous air flow towards the fan. The free space can further be used to implement an (optional) flow grid or other air guiding structures optimizing the flow pattern towards the fan and leading to an improvement of pressure drop and acoustics.

Weight and height are two critical aspects of rooftop carried fine dust filters. Advantageously the proposed sealing approach for fine dust filter elements of an ambient air purifier contributes to both aspects. The sealing has only little impact on the usable cross-section for filtration and adds only little to the height of the filter system. It allows to use very light nonwoven elements.

In embodiments the ambient air purifier according to the invention is an outdoor air purifier that is adapted to clean the environment. In other embodiments the ambient air purifier according to the invention can be used in semi-closed environments such as mines and/or warehouses.

According to a favorable embodiment of the ambient air purifier, a second lateral frame element may be provided on at least a lower front end of the at least one filter element opposing the upper front end, having a larger cross section than the lower front end and protruding beyond the lower front end of the filter medium body with a protruding segment.

Towards the bottom of the slot of the mounting base, i.e. on a lower side of the filter element, a thick, compressible sideband can be applied that is primarily compressed by the weight of the filter element thus sealing the bottom. Using at least one voluminous, compressible sideband also advantageously offers a means of tolerance compensation. A 300 mm high plastic part e.g. may suffer warp on the mm-level during operation that should be compensated by the filter element.

According to a favorable embodiment the ambient air purifier may comprise a multitude of filter element segments of the at least one filter element, neighboring each other circumferentially, wherein the multitude of filter element segments is arranged in a polygonal or circular shape around the rotational axis of the fan.

As main filter element, round elements or alternatively n-edged arrangements of filter segments, in particular concentric arrangements, may be used, such as hexagonal, octagonal arrangements or the like. In a preferred embodiment, the main filter element may also be concentric with the fan. The air purifier may feature two flow inlets from opposite directions of the housing, and pre filter elements arranged between these inlets and the main elements for pre-separating coarse dust, water, biological material as well as for preventing stone chipping. Such a two-inlet arrangement is advantageous in terms of modularity, as a multitude of filter systems can be stacked side by side, e.g. on a bus roof. Other arrangements with different inlet orientations are also feasible and allow for different modular approaches. For instance, one inlet on two neighboring edges could be used in a square array of the air purifier.

According to a favorable embodiment of the ambient air purifier, the protruding segment of the first lateral frame element may be pinched along a circumferential pinching line of each of the multitude of filter element segments. Thus, an effective sealing of the filter element or filter element segment to the housing of the ambient air purifier may be achieved.

According to a favorable embodiment of the ambient air purifier, the housing cover may be provided with an axially protruding groove structure for accommodating the upper front end of the at least one filter element and/or the filter element segments with the lateral frame element. In particular the groove structure may accommodate the counterpart element for pinching the protruding segment of the lateral frame element when the housing is closed. The filter element with the protruding lateral frame element may be accommodated in the groove structure. Thus, precise positioning of the filter element is not needed, and sealing may be achieved by pressing the groove structure on the top of the filter element. The lateral frame element is circumferentially covered by the groove structure.

Advantageously at least two of the multitude of filter element segments may be connected at least by the first and/or the second lateral frame element extending essentially parallel to the mounting base.

According to a favorable embodiment of the ambient air purifier, the lateral frame element may be a sideband or a headband of the at least one filter element. The bellows of the filter elements may be oriented in different orientations regarding the rotational axis of the ambient air purifier. If the longitudinal extension of the pleats of the filter element is oriented parallel to the rotational axis then the lateral frame element is a sideband. If the longitudinal extension of the pleats of the filter element is oriented perpendicular to the rotational axis than the lateral frame element is a headband.

According to a favorable embodiment the ambient air purifier may comprise filter element segments of the at least one filter element, wherein the filter element segments are arranged in parallel on opposing sides of the rotational axis of the fan. Especially pre filter elements may be positioned on both outer side walls of the housing of the ambient air purifier opposing each other and enclosing the main filter element surrounding the fan.

According to a favorable embodiment of the ambient air purifier, a longitudinal extension of pleats of the filter medium body may be arranged in parallel to the rotational axis of the fan. Thus, effective filtering of dust particles is possible if the fan is centered in the housing and the air flow is directed perpendicular to pleats of the filter bellows.

According to a favorable embodiment of the ambient air purifier, the at least one filter element in total may cover an angular portion of at least 270°, preferably at least 330°, of the circumference of the inner clean air space. This allows for a large filter area inside the housing.

According to a favorable embodiment of the ambient air purifier, one of the at least one filter elements may be arranged essentially coaxial to the rotational axis of the fan. A concentric arrangement advantageously leads to a circular clean air space that allows for a homogeneous air flow towards the fan.

According to a favorable embodiment of the ambient air purifier, at least one of the at least one filter element may be arranged concentrically around a center of the inner clean air space, wherein the center of the inner clean air space is defined by the rotational axis of the fan. This allows for a compact arrangement of filter elements and fan.

According to a favorable embodiment of the ambient air purifier, the fan may be held by a support structure attached to the mounting base, wherein preferably the support structure includes at least the one strut, preferably extending perpendicular with regards to a plane of the mounting base. In particular the support structure may be embodied as a support cage having a multitude of struts angularly distributed around the circumference. This yields a stable and robust support for the fan.

According to a favorable embodiment of the ambient air purifier, the support structure may act as a radial support for the at least one filter element. Advantageously, a compact and stable support is provided along the filter element surface.

According to a favorable embodiment of the ambient air purifier, the top cover wall may include at least one opening that acts as the flow outlet, wherein preferably a diameter of the opening corresponds to a diameter of the fan.

According to another aspect of the invention use of a filter element in a vehicle mountable ambient air purifier for purifying ambient air is proposed, the filter element including at least one filter medium body, in particular provided in the form of a pleated filter bellows, wherein at least a first lateral frame element, in particular a plane lateral frame element, is provided on at least an upper front end of the filter element, having a larger cross section than the upper front end and protruding beyond the upper front end of the filter medium body with a protruding segment, wherein the protruding segment of the lateral frame element provides a sealing area exterior to the at least upper front end.

Advantageously, the ambient air purifier allows for substantial reductions of the fine dust emission footprint of a vehicle by means of the filter element despite very high flow rates are required, in the order of more than 10.000 m³/h for a bus and full compensation of fine dust emissions. With the limited power available on the vehicle, power efficiency is extremely important for systems targeting full compensation. This implies the need for filter systems with extremely low pressure drop and for the use of large fans. Both can be improved by increasing the filter system's dimensions. However, filter system size and especially system height are limited for roof-carried systems.

Enabling high flow rate systems to be operated with limited electrical power, e.g. to fully compensate the fine dust emission footprint of a bus, making ambient air purifier systems feasible for electrified vehicles without reducing the range by power consumption of the air purifier.

### Brief Description of the Drawings

The present invention together with the above-mentioned and other objects and advantages may best be understood from the following detailed description of the embodiments, but not restricted to the embodiments, wherein is shown in:
- Figure 1: a perspective view of an ambient air purifier according to an embodiment of the invention;
- Figure 2: a top view of the air purifier shown in Figure 1 indicating intersection lines A-A and B-B;
- Figure 3: in an exploded view the arrangement of the filter element and the fan of the ambient air purifier of Figure 1;
- Figure 4: a cut view through parts of the ambient air purifier of Figure 1 indicating an intersection plane C;
- Figure 5: a cut view through the ambient air purifier of Figure 1 in the intersection plane C of Figure 4;
- Figure 6: a cut view through the ambient air purifier of Figure 1 along intersection line A-A of Figure 2 indicating detailed intersections Y and Z;
- Figure 7: a detailed view of intersection Y of Figure 6;
- Figure 8: a detailed view of intersection Z of Figure 6;
- Figure 9: a cut view through the ambient air purifier of Figure 1 along intersection line B-B of Figure 2;
- Figure 10: a top view of two filter element segments of a main filter element in a manufacturing configuration;
- Figure 11: a perspective view of the two filter element segments of Figure 10 in a mounting configuration;
- Figure 12: a cut view of the filter element segment of Figure 10;
- Figure 13: a schematic top view of the two filter element segments of Figure 10 in a mounting configuration indicating pinching lines;
- Figure 14: a top view of a pre filter element; and
- Figure 15: a cut view of the filter element of Figure 14.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

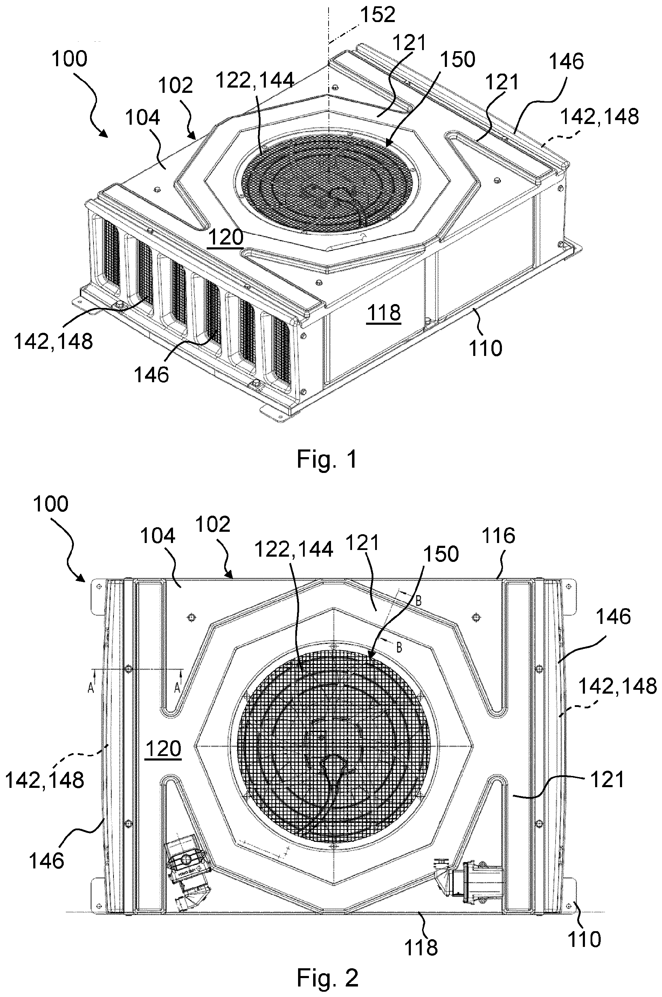

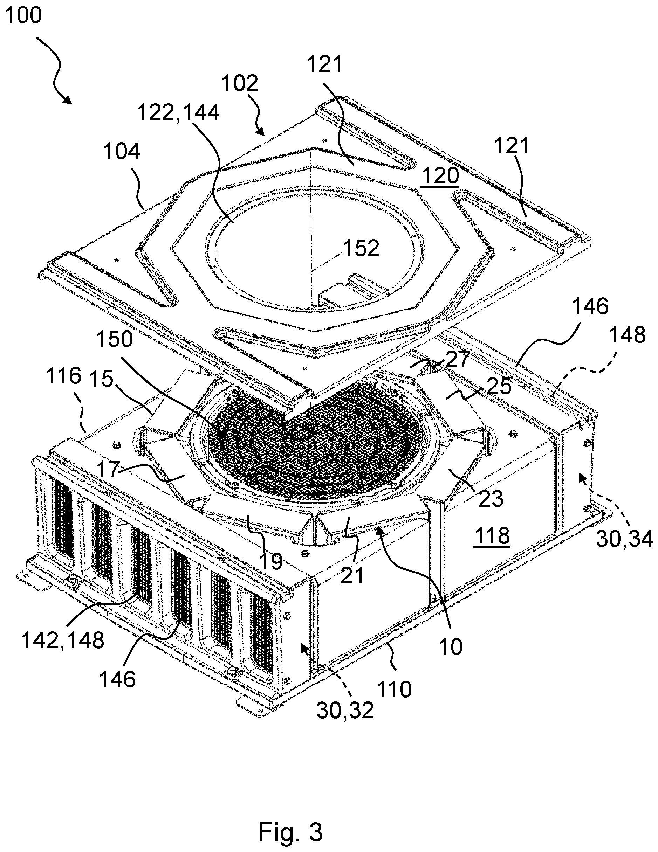

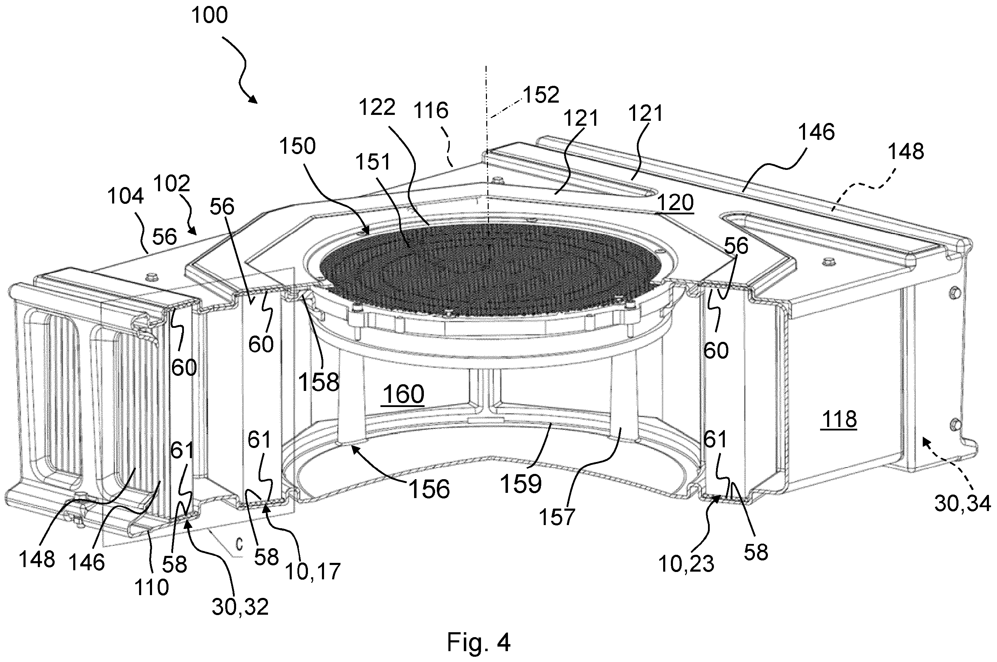

Figure 1 depicts a perspective view of an ambient air purifier 100 according to an embodiment of the invention. Figure 2 shows a top view of the air purifier 100 indicating intersection lines A-A and B-B, whereas in Figure 3 in an exploded view the arrangement of the filter element and the fan of the ambient air purifier 100 is depicted. In Figure 4 a cut view through parts of the ambient air purifier 100 is shown indicating an intersection plane C.

The ambient air purifier 100 comprises a housing 102 comprising at least a housing cover 104 and a mounting base 110. The housing 102 has a flow inlet 142 for ambient air to be purified on each of two opposing sides of the housing 102 and at least one flow outlet 144 for cleaned air in a housing cover part 104. The flow inlet 142 is arranged between two side walls 116, 118, connected to the mounting base 110. The housing cover 104 comprises or consists of a plastic material, especially an injection-moldable or vacuum-formable plastic material.

A fan 150 with a standing rotational axis 152 is arranged within the housing 102. The at least one flow inlet 142 is arranged radially with regards to the rotational axis 152 of the fan 150. The at least one outlet 144 is arranged axially with regards to the rotational axis 152 of the fan 150. The fan 150 is displaced axially from the mounting base 110 of the housing 102 and is in fluid connection with the inner clean air space 160.

The housing cover part 104 includes a top cover wall 120 extending axially displaced from the mounting base 110 and is arranged, in this embodiment, parallel, to a rotational axis 152 of a fan 150. The top cover wall 120 includes an opening 122 that acts as the flow outlet 144. In this embodiment a diameter of the opening 122 corresponds to a diameter of the fan 150.

The housing 102 has a planar grille 146 extending over each flow inlet 142. The flow inlet 142 is provided in an opening 148 of the housing 102. The grille 146 may extend over the complete opening 148.

At least one filter element 10, 30 at least partially surrounds, in particular circumferentially, an inner clean air space 160 (see Figure 4) of the housing 102. The embodiment shown comprises two types of filter elements 10, 30. A pre filter element 30 with two filter element segments 32, 34 arranged on both flow inlets 142 of both sides of the housing 102 and a main filter element 10 comprising a multitude of filter element segments 15, 17, 19, 21, 23, 25, 27, 29, circumferentially surrounding the fan 150. The filter element segments 32, 34 of the pre filter element 30 are arranged in parallel on opposing sides of the rotational axis 152 of the fan 150.

The multitude of filter element segments 15, 17, 19, 21, 23, 25, 27, 29 of the filter element 10, neighboring each other circumferentially, is arranged in a polygonal or circular shape around the rotational axis 152 of the fan 150. The filter element 10 in total covers an angular portion of at least 270°, preferably at least 330°, of the circumference of the inner clean air space 160. The filter element 10, 30 is arranged essentially coaxial to the rotational axis 152 of the fan 150.

Thus, the filter elements 10, 30 are arranged concentrically around a center of the inner clean air space 160, wherein the center of the inner clean air space 160 is defined by the rotational axis 152 of the fan 150.

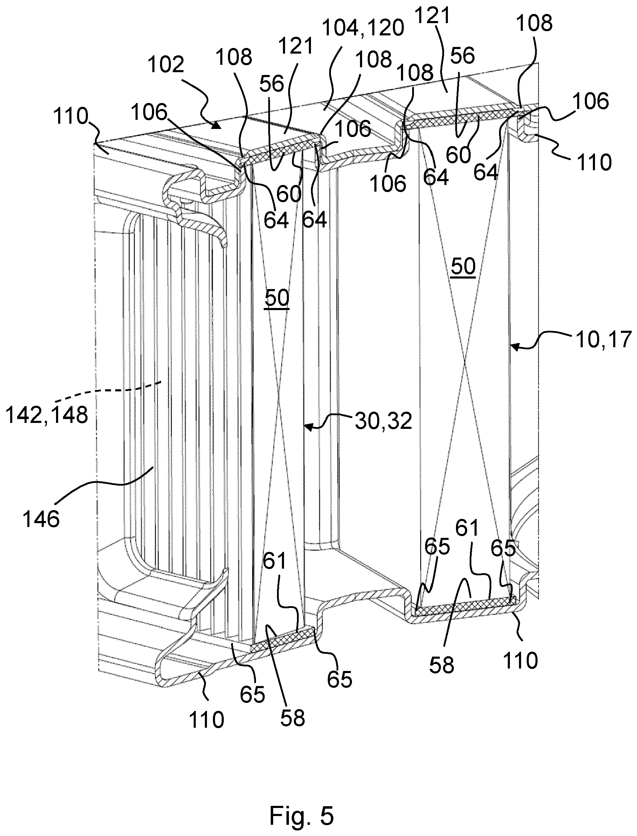

The filter elements 10, 30 extend essentially parallel to the rotational axis 152 of the fan 150. The filter elements 10, 30 include at least one filter medium body 50 (see Fig. 5), in particular configured as a pleated filter bellows.

A longitudinal extension of pleats of the filter medium body 50 of both filter elements 10, 30 is arranged in parallel to the rotational axis 152 of the fan 150.

As can be seen in Figure 4, the fan 150 is held by a support structure 156 attached to the mounting base 110. Preferably the support structure 156 includes several struts 157, preferably extending perpendicular with regards to a plane of the mounting base 110.

The support structure 156 is embodied as a support cage having a multitude of struts 157 angularly distributed around the circumference. The support structure 156 is arranged within an inner clean air space 160 and delimits the inner clean air space 160 radially. The fan 150 is attached to an upper ring element 158 support structure 156 which is supported by the struts 157. For instance, a grid-like cover 151 of the fan 150 may rest on the upper ring 158 or be attached to the cover in an alternative configuration. The struts 157 are resting on a lower ring segment 159 of the support structure 156 which is attached to the mounting base 110. In particular, the support structure 156 may be composed of cylinder segments with two strut segments at each side connected at one end with regards to the rotational axis 152 of the fan 150 by an upper circular segment and at the opposing end with regards to the fan rotational axis 152 by a lower circular segment. In an assembled state of the cylinder segments, two abutting strut segment constitute one of the struts 157.

The support structure 156 acts as a radial support for the at least one filter element 10, 30. The filter elements 10, 30 are curved with a curving radius corresponding to a radius of the support structure 156.

Figure 5 depicts a cut view through the ambient air purifier 100 in the intersection plane C of Figure 4, wherein a section of both filter elements 10, 30 is shown.

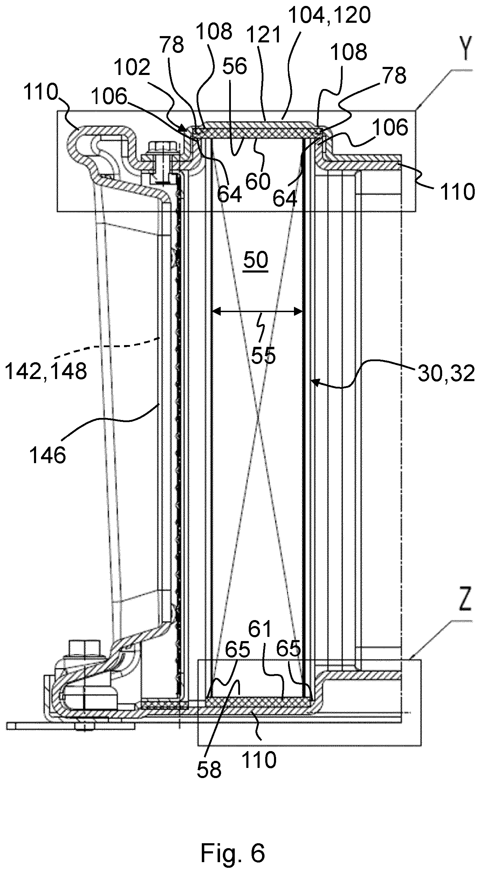

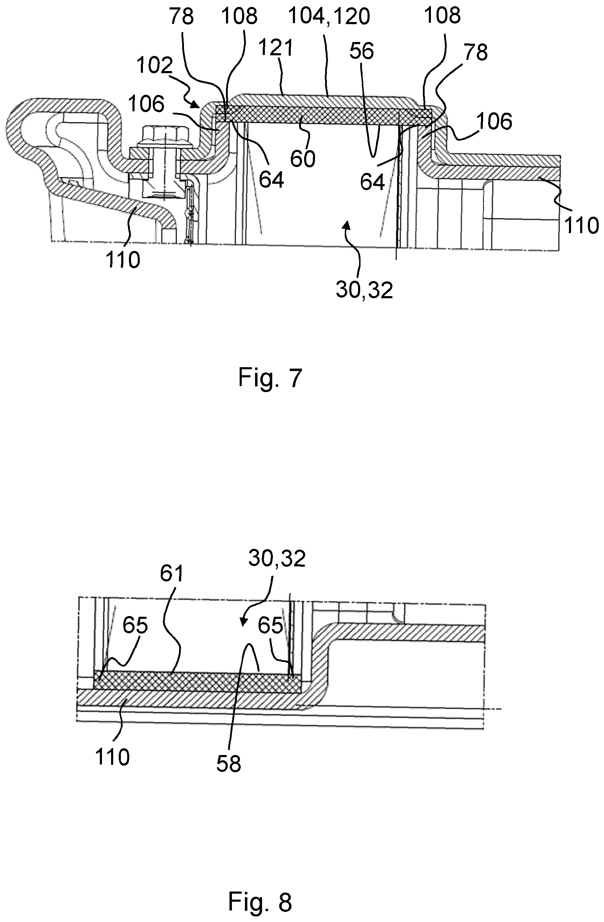

Figure 6 shows a cut view through the pre filter element 30 of the ambient air purifier 100 along intersection line A-A of Figure 2 indicating detailed intersections Y and Z. In Figure 7 a detailed view of intersection Y of Figure 6 and in Figure 8 a detailed view of intersection Z of Figure 6 is depicted.

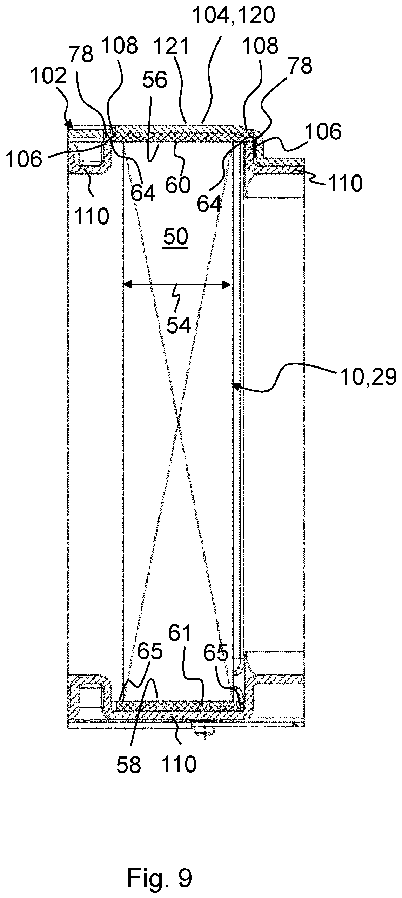

Figure 9 shows a cut view through the main filter element 10 of the ambient air purifier 100 along intersection line B-B of Figure 2.

As may be seen in the cut views, a first lateral frame element 60, in particular a plane lateral frame element, is provided on an upper front end 56 of the filter elements 10, 30.

A lateral frame element 60 of a pleat pack that runs perpendicular to the longitudinal extension of the pleats of the filter element 10, 30 is usually called a sideband, and a lateral frame element of a pleat pack that runs parallel to the longitudinal extension of the pleats is usually called a headband. In the preferred embodiment shown the longitudinal extension of the pleats runs along the vertical axis 152 in a standing orientation so that the lateral frame element 60 taking part in the sealing interface preferably is a sideband.

The lateral frame element 60 has a larger cross section than the upper front end 56 and protrudes beyond the upper front end 56 of the filter medium body 50 with a protruding segment 64. The protruding segment 64 of the lateral frame element 60 provides a sealing area between the filter element 10, 30 and the housing 102 exterior to the upper front end 56. The protruding segment 64 is pinched between a support structure 106 of the mounting base 110 and a counterpart element 108 of the housing cover 104 along a pinching line 78 when the housing 102 is in a closed state.

The lateral frame element 60 extends beyond a width 54 of the main filter element 10 as well as beyond a width 55 of the pre filter element 30.

A second lateral frame element 61 is provided on a lower front end 58 of the filter elements 10, 30 opposing the upper front end 56. The second lateral frame element 61 has a larger cross section than the lower front end 58 and protrudes beyond the lower front end 58 of the filter medium body 50 with a protruding segment 65. The second lateral frame element 61 is also provided as a sideband.

As may be seen in the cut view of Figure 4 as well as in the cut views of Figures 5 to 9, the housing cover 104 is provided with an axially protruding groove structure 121 for accommodating the upper front end 56 of the at least one filter element 10, 30 and/or the filter element segments 15, 17, 19, 21, 23, 25, 27, 29 with the lateral frame element 60. In particular the groove structure 121 accommodates the counterpart element 108 for pinching the protruding segment 64 of the lateral frame element 60 when the housing 102 is closed.

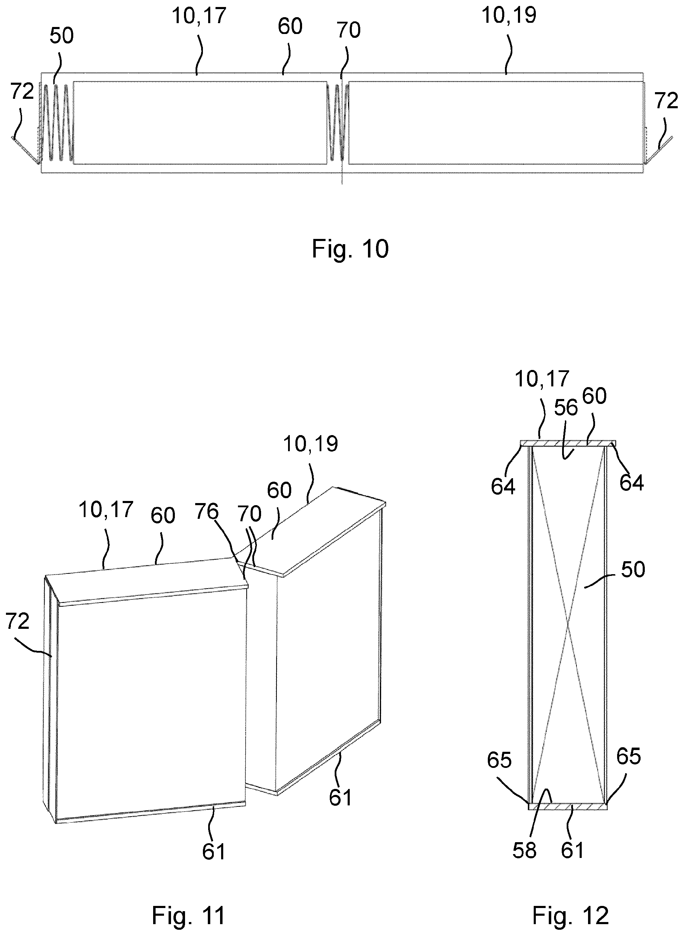

Figure 10 depicts a top view of two filter element segments 17, 19 of a main filter element 10 in a manufacturing configuration. The pleat pack is manufactured with the pleated filter medium body 50 as a straight pack. A sideband as a lateral frame element 60 is arranged on sides of the pleats 52. At both ends of the filter element 10 connection bands 72 are arranged for sealing purposes. The connection band 72 protrudes at a variable angle from the head side of the filter medium body 50. The sealing tab is used to seal the edges of the filter medium body 50. The two filter element segments 17, 19 will be cut along the cut line 70 for bending the two filter element segments 17, 19 for mounting in the mounting base 110 of the ambient air purifier 100, which is shown in Figure 11.

Another advantageous feature of the overlapping sideband 60 is that it is also usable for filter elements 10 with slit sidebands 60. The slits 76 are done between two adjacent parts of the filter element 10 and go over e.g. more than 75% of the sideband 60. The slits 76 in the sideband 60 allow the two neighboring segments 17, 19 of the filter element 10 to be mounted in an angle. Bending the filter element 10 will cause material of the slit tip to be compressed, thus making the material likely to bulge and to create an untight area. In this case, the pinching line 78 is not necessarily straight, but can also at least partially run along the slits contour and into the filter medium body 50. This way, a potential leakage path along the slit 76 is closed, while the region around the tip is also stabilized and deformation is limited. When reaching into the filter medium body 50 the contour of the pinching line 78 is not necessarily straight. This way, the bottom side of the pinching contour can within the slit 76 advantageously be combined with a vertical solid beam in the housing 102 to create a tight sealing and at the same time create an obstruction for more simply shaped prismatic elements.

Figure 11 shows a perspective view of the two filter element segments of Figure 10 in a mounting configuration. The two filter element segments 17, 19 are nearly cut through so that they may be bent according to the mounting geometry of the mounting base 110. The middle pleat 52 between the two filter element segments 17, 19 is spread for bending the filter element segments 17, 19 against each other. Besides the pleat 52 the filter element segments 17, 19 are connected at least by the first and/or the second lateral frame element 60, 61 extending essentially parallel to the mounting base 110.

In Figure 12 a cut view of the filter element segment 17 of Figure 10 is depicted. Clearly the protruding segments 64 on the upper front end 56 and the protruding segments 65 on the lower front end 58 are to be seen.

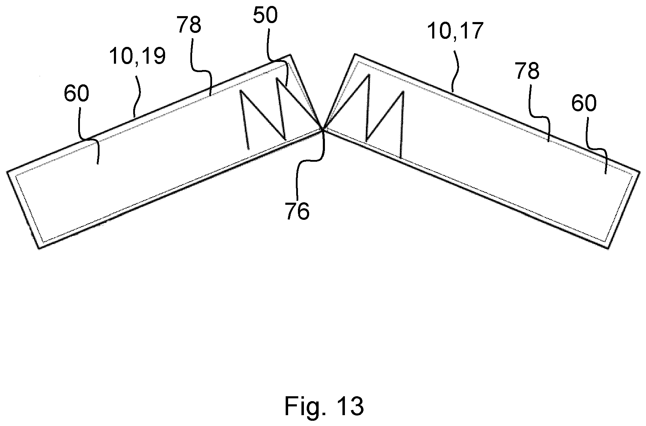

Figure 13 depicts a schematic top view of the two filter element segments 17, 19 of Figure 10 in a mounting configuration indicating pinching lines 78, where the lateral frame element 60 is pinched between the support structure 106 of the mounting base 110 and the counterpart element 108 of the housing cover 104. The pinching lines 78 of the two filter element segments 17, 19 meet at the connection point of the slit 76 between the filter element segments 17, 19 being connected by the pleat 52 running through from one filter element segment 17 to the other filter element segment 19. The protruding segment 64 of the first lateral frame element 60 is pinched along a circumferential pinching line 78 of the filter element segments 17, 19.

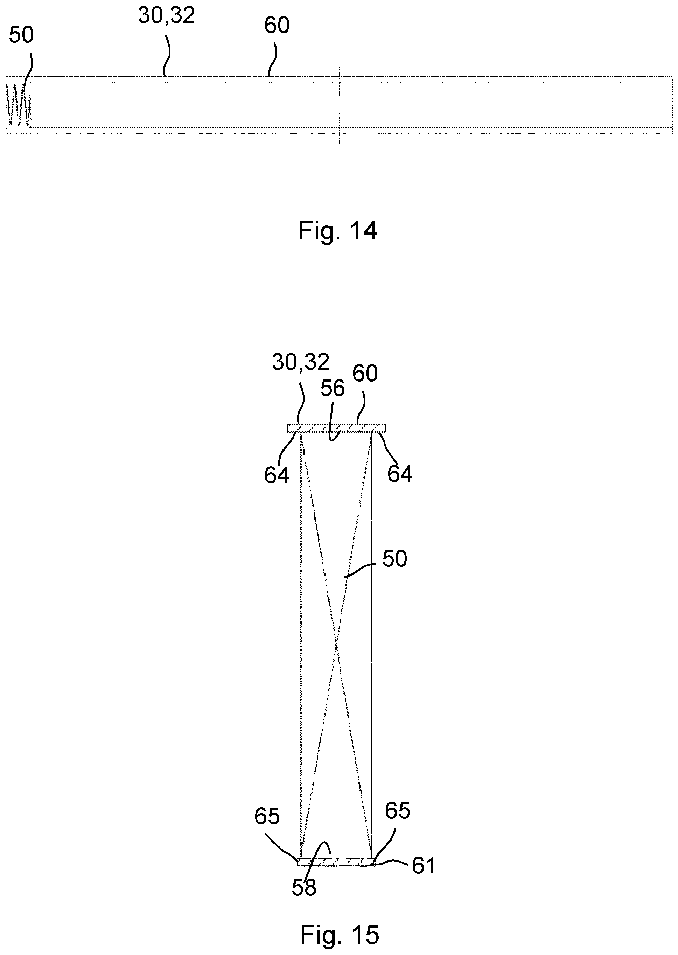

Figure 14 depicts a top view of a pre filter element 30, whereas in Figure 15 a cut view of the filter element 30 is shown. The pre filter element 30 is provided with a straight pleated filter medium body 50, covered on both front ends 56, 58 with lateral frame elements 60, 61. In Figure 15 the protruding segments 64 on the upper front end 56 and the protruding segments 65 on the lower front end 58 are to be seen.

### Reference Numerals

- 10: filter element
- 12: element part
- 14: element part
- 15: segment
- 17: segment
- 19: segment
- 21: segment
- 23: segment
- 25: segment
- 27: segment
- 29: segment
- 30: filter element
- 32: element part
- 34: element part
- 50: filter medium body
- 54: width
- 55: width
- 56: upper front end
- 58: lower front end
- 60: first lateral frame element
- 61: second lateral frame element
- 64: protruding segment
- 65: protruding segment
- 70: cut line
- 72: connection band
- 76: slit
- 78: pinching line
- 100: ambient air purifier
- 102: housing
- 104: housing cover
- 106: support structure
- 108: counterpart element
- 110: mounting base
- 114: housing structure
- 116: side wall
- 118: side wall
- 120: top cover wall
- 121: groove structure
- 122: opening
- 142: flow inlet
- 144: flow outlet
- 146: grille
- 148: opening
- 150: fan
- 151: grid-like cover
- 152: rotational axis
- 156: support structure
- 157: strut
- 158: ring
- 159: ring
- 160: clean air space

## Claims

1. An ambient air purifier (100) comprising:
a housing (102) comprising at least a housing cover (104) and a mounting base (110), wherein the housing (102) has at least one flow inlet (142) for ambient air to be purified and at least one flow outlet (144) for cleaned air;
a fan (150) arranged within the housing (102); and
at least one filter element (10, 30),
wherein the at least one filter element (10, 30) includes at least one filter medium body (50), in particular configured as a pleated filter bellows (52),
**characterised in that** at least a first lateral frame element (60), in particular a plane lateral frame element, is provided on at least an upper front end (56) of the at least one filter medium body (50) of the at least one filter element (10, 30), having a larger cross section than the upper front end (56) and protruding beyond the upper front end (56) of the filter medium body (50) with a protruding segment (64), and
the protruding segment (64) of the lateral frame element (60) provides a sealing area between the filter element (10, 30) and the housing (102) exterior to the upper front end (56) and is pinched between a support structure (106) of the mounting base (110) and a counterpart element (108) of the housing cover (104) when the housing (102) is in a closed state.

2. The ambient air purifier according to claim 1, wherein the fan (150) has a standing rotational axis (152),
wherein the at least one flow inlet (142) is arranged radially with regards to the rotational axis (152) of the fan (150), and
wherein the at least one outlet (144) is arranged axially with regards to the rotational axis (152) of the fan (150).

3. The ambient air purifier according to claim 1 or 2, wherein the at least one filter element (10, 30) at least partially surrounds, in particular circumferentially, an inner clean air space (160) of the housing (102), and
wherein preferably the fan (150) is displaced axially from the mounting base (110) of the housing (102) and is in fluid connection with the inner clean air space (160) and/or the at least one filter element (10, 30) extends essentially parallel to the rotational axis (152) of the fan (150).

4. The ambient air purifier according to any one of the preceding claims, wherein a second lateral frame element (61) is provided on at least a lower front end (58) of the at least one filter element (10, 30) opposing the upper front end (56), having a larger cross section than the lower front end (58) and protruding beyond the lower front end (58) of the filter medium body (50) with a protruding segment (65).

5. The ambient air purifier according to any one of the preceding claims, further comprising a multitude of filter element segments (15, 17, 19, 21, 23, 25, 27, 29) of the at least one filter element (10), neighboring each other circumferentially,
wherein the multitude of filter element segments (15, 17, 19, 21, 23, 25, 27, 29) is arranged in a polygonal or circular shape around the rotational axis (152) of the fan (150).

6. The ambient air purifier according to claim 5, wherein the protruding segment (64) of the first lateral frame element (60) is pinched along a circumferential pinching line (78) of each of the multitude of filter element segments (15, 17, 19, 21, 23, 25, 27, 29).

7. The ambient air purifier according to any one of the preceding claims, wherein the housing cover (104) is provided with an axially protruding groove structure (121) for accommodating the upper front end (56) of the at least one filter element (10, 30) and/or the filter element segments (15, 17, 19, 21, 23, 25, 27, 29) with the lateral frame element (60), in particular wherein the groove structure (121) accommodates the counterpart element (108) for pinching the protruding segment (64) of the lateral frame element (60) when the housing (102) is closed.

8. The ambient air purifier according to any one of the preceding claims, wherein the lateral frame element (60, 61) is a sideband or a headband of the at least one filter element (10, 30).

9. The ambient air purifier according to any one of the preceding claims, further comprising filter element segments (32, 34) of the at least one filter element (30),
wherein the filter element segments (32, 34) are arranged in parallel on opposing sides of the rotational axis (152) of the fan (150).

10. The ambient air purifier according to any one of the preceding claims, wherein a longitudinal extension of pleats of the filter medium body (50) is arranged in parallel to the rotational axis (152) of the fan (150).

11. The ambient air purifier according to any one of the preceding claims, wherein the at least one filter element (10, 30) in total covers an angular portion of at least 270°, preferably at least 330°, of the circumference of the inner clean air space (160).

12. The ambient air purifier according to any one of the preceding claims, wherein one of the at least one filter element (10, 30) is arranged essentially coaxial to the rotational axis (152) of the fan (150).

13. The ambient air purifier according to any one of the preceding claims, wherein at least one of the at least one filter element (10, 30) is arranged concentrically around a center of the inner clean air space (160), and
wherein the center of the inner clean air space (160) is defined by the rotational axis (152) of the fan (150).

14. The ambient air purifier according to any one of the preceding claims, wherein the fan (150) is held by a support structure (156) attached to the mounting base (110), and
wherein preferably the support structure (156) includes at least one strut (157), preferably extending perpendicular with regards to a plane of the mounting base (110), in particular wherein the support structure (156) is embodied as a support cage having a multitude of struts (157) angularly distributed around the circumference.

15. The ambient air purifier according to claim 14, wherein the support structure (156) acts as a radial support for the at least one filter element (10, 30).

16. The ambient air purifier according to any one of the preceding claims, wherein the top cover wall (120) includes at least one opening (122) that acts as the flow outlet (144), and
wherein preferably a diameter of the opening (122) corresponds to a diameter of the fan (150).

17. Use of a filter element (10, 30) in a vehicle mountable ambient air purifier (100) according to any one of the preceding claims, for purifying ambient air, the filter element (10, 30) including at least one filter medium body (50), in particular provided in the form of a pleated filter bellows (52),
wherein at least a first lateral frame element (60), in particular a plane lateral frame element, is provided on at least an upper front end (56) of the filter element (10, 30), having a larger cross section than the upper front end (56) and protruding beyond the upper front end (56) of the filter medium body (50) with a protruding segment (64), and
wherein the protruding segment (64) of the lateral frame element (60) provides a sealing area exterior to the at least upper front end (56).

## Patentansprüche

1. Umgebungsluftreiniger (100) umfassend:
ein Gehäuse (102) umfassend mindestens einen Gehäusedeckel (104) und eine Montagebasis (110), wobei das Gehäuse (102) mindestens einen Einlass (142) für zu reinigende Umgebungsluft und mindestens einen Auslass (144) für gereinigte Luft hat;
einen innerhalb des Gehäuses (102) angeordneten Ventilator (150); und
mindestens ein Filterelement (10, 30),
wobei das mindestens eine Filterelement (10, 30) mindestens einen Filtermedienkörper (50) umfasst, der insbesondere als gefalteter Filterbalg (52) ausgebildet ist,
**dadurch gekennzeichnet, dass** mindestens an einem oberen vorderen Ende (56) des mindestens einen Filtermediumkörpers (50) des mindestens einen Filterelements (10, 30) mindestens ein erstes seitliches Rahmenelement (60), insbesondere ein ebenes seitliches Rahmenelement, bereitgestellt ist, das einen größeren Querschnitt als das obere vordere Ende (56) hat und mit einem vorstehenden Segment (64) über das obere vordere Ende (56) des Filtermedienkörpers (50) vorsteht, und
das vorstehende Segment (64) des seitlichen Rahmenelements (60) einen Dichtungsbereich zwischen dem Filterelement (10, 30) und dem Gehäuse (102) außerhalb des oberen vorderen Endes (56) bereitstellt und in einem geschlossenen Zustand des Gehäuses (102) zwischen einer Stützstruktur (106) der Montagebasis (110) und einem Gegenelement (108) des Gehäusedeckels (104) eingeklemmt ist.

2. Umgebungsluftreiniger nach Anspruch 1, wobei der Ventilator (150) eine stehende Drehachse (152) aufweist,
wobei der mindestens eine Strömungseinlass (142) radial zur Rotationsachse (152) des Ventilators (150) angeordnet ist, und
wobei der mindestens eine Auslass (144) axial zur Rotationsachse (152) des Ventilators (150) angeordnet ist.

3. Umgebungsluftreiniger nach Anspruch 1 oder 2, wobei das mindestens eine Filterelement (10, 30) einen inneren Reinluftraum (160) des Gehäuses (102) mindestens teilweise, insbesondere umfänglich, umgibt, und
wobei vorzugsweise der Ventilator (150) axial gegenüber der Montagebasis (110) des Gehäuses (102) versetzt ist und in Fluidverbindung mit dem inneren Reinluftraum (160) steht und/oder das mindestens eine Filterelement (10, 30) im Wesentlichen parallel zur Rotationsachse (152) des Ventilators (150) verläuft.

4. Umgebungsluftreiniger nach einem der obigen Ansprüche, wobei ein zweites seitliches Rahmenelement (61) an mindestens einem unteren vorderen Ende (58) des mindestens einen Filterelements (10, 30) gegenüber dem oberen vorderen Ende (56) gegenüberliegend vorgesehen ist, das einen größeren Querschnitt als das untere vordere Ende (58) aufweist und mit einem vorstehenden Segment (65) über das untere vordere Ende (58) des Filtermedienkörpers (50) hinausragt.

5. Umgebungsluftreiniger nach einem der obigen Ansprüche, ferner umfassend eine Vielzahl von Filterelementsegmenten (15, 17, 19, 21, 23, 25, 27, 29) des mindestens einen Filterelements (10), die einander in Umfangsrichtung benachbart sind,
wobei die Vielzahl von Filterelementsegmenten (15, 17, 19, 21, 23, 25, 27, 29) in einer polygonalen oder kreisförmigen Form um die Rotationsachse (152) des Ventilators (150) angeordnet ist.

6. Umgebungsluftreiniger nach Anspruch 5, wobei das vorstehende Segment (64) des ersten seitlichen Rahmenelements (60) entlang einer umlaufenden Klemmlinie (78) jedes der Vielzahl von Filterelementsegmenten (15, 17, 19, 21, 23, 25, 27, 29) eingeklemmt ist.

7. Umgebungsluftreiniger nach einem der obigen Ansprüche, wobei die Gehäuseabdeckung (104) mit einer axial vorstehenden Nutstruktur (121) versehen ist, um das obere vordere Ende (56) des mindestens einen Filterelements (10, 30) und/oder der Filterelementsegmente (15, 17, 19, 21, 23, 25, 27, 29) mit dem seitlichen Rahmenelement (60) aufzunehmen, wobei insbesondere die Nutstruktur (121) das Gegenelement (108) zum Einklemmen des vorstehenden Segments (64) des seitlichen Rahmenelements (60) bei geschlossenem Gehäuse (102) aufnimmt.

8. Umgebungsluftreiniger nach einem der obigen Ansprüche, wobei das seitliche Rahmenelement (60, 61) ein Seitenband oder ein Kopfband des mindestens einen Filterelements (10, 30) ist.

9. Umgebungsluftreiniger nach einem der obigen Ansprüche, ferner umfassend Filterelementsegmente (32, 34) des mindestens einen Filterelements (30),
wobei die Filterelementsegmente (32, 34) parallel auf gegenüberliegenden Seiten der Rotationsachse (152) des Ventilators (150) angeordnet sind.

10. Umgebungsluftreiniger nach einem der obigen Ansprüche, wobei eine Längserstreckung der Falten des Filtermedienkörpers (50) parallel zur Rotationsachse (152) des Ventilators (150) angeordnet ist.

11. Umgebungsluftreiniger nach einem der obigen Ansprüche, wobei das mindestens eine Filterelement (10, 30) insgesamt einen Winkelbereich von mindestens 270°, vorzugsweise von mindestens 330°, des Umfangs des inneren Reinluftraums (160) abdeckt.

12. Umgebungsluftreiniger nach einem der obigen Ansprüche, wobei eines der mindestens einen Filterelemente (10, 30) im Wesentlichen koaxial zur Rotationsachse (152) des Ventilators (150) angeordnet ist.

13. Umgebungsluftreiniger nach einem der obigen Ansprüche, wobei mindestens eines der mindestens einen Filterelemente (10, 30) konzentrisch um einen Mittelpunkt des inneren Reinluftraums (160) angeordnet ist und
wobei der Mittelpunkt des inneren Reinluftraums (160) durch die Rotationsachse (152) des Ventilators (150) definiert ist.

14. Umgebungsluftreiniger nach einem der obigen Ansprüche, wobei der Ventilator (150) von einer an der Montagebasis (110) befestigten Stützstruktur (156) gehalten wird, und
wobei vorzugsweise die Stützstruktur (156) mindestens eine Strebe (157) umfasst, die sich vorzugsweise senkrecht zu einer Ebene der Montagebasis (110) erstreckt, insbesondere wobei die Stützstruktur (156) als Stützkäfig mit einer Vielzahl von Streben (157) ausgebildet ist, die winklig um den Umfang verteilt sind.

15. Umgebungsluftreiniger nach Anspruch 14, wobei die Stützstruktur (156) als radiale Stütze für das mindestens eine Filterelement (10, 30) dient.

16. Umgebungsluftreiniger nach einem der obigen Ansprüche, wobei die obere Abdeckwand (120) mindestens eine Öffnung (122) umfasst, die als Strömungsauslass (144) dient, und
wobei vorzugsweise ein Durchmesser der Öffnung (122) einem Durchmesser des Ventilators (150) entspricht.

17. Verwendung eines Filterelements (10, 30) in einem in einem Fahrzeug montierbaren Umgebungsluftreiniger (100) nach einem der obigen Ansprüche zur Reinigung der Umgebungsluft, wobei das Filterelement (10, 30) mindestens einen Filtermedienkörper (50) umfasst, der insbesondere in Form eines gefalteten Filterbalgs (52) vorgesehen ist,
wobei an mindestens einem oberen vorderen Ende (56) des Filterelements (10, 30) mindestens ein erstes seitliches Rahmenelement (60), insbesondere ein ebenes seitliches Rahmenelement, bereitgestellt ist, das einen größeren Querschnitt als das obere vordere Ende (56) hat und mit einem vorstehenden Segment (64) über das obere vordere Ende (56) des Filtermedienkörpers (50) vorsteht, und
wobei das vorstehende Segment (64) des seitlichen Rahmenelements (60) eine Dichtfläche außerhalb des mindestens oberen vorderen Endes (56) bildet.

## Revendications

1. Purificateur d'air ambiant (100) comprenant:
un boîtier (102) comprenant au moins un couvercle de boîtier (104) et une base de montage (110), dans lequel le boîtier (102) dispose au moins d'une entrée d'écoulement (142) pour l'air ambiant à purifier et au moins d'une sortie d'écoulement (144) pour l'air purifié;
d'un ventilateur (150) disposé à l'intérieur du boîtier (102); et
au moins d'un élément filtrant (10, 30),
dans lequel l'élément filtrant (10, 30), au moins au nombre d'un, comprend au moins un corps de milieu filtrant (50), en particulier configuré comme un soufflet de filtre plissé (52),
**caractérisé en ce qu'**au moins un premier élément de cadre latéral (60), en particulier un élément de cadre latéral plan, est prévu sur au moins une extrémité avant supérieure (56) du corps de milieu filtrant (50), au moins au nombre d'un, de l'élément filtrant (10, 30), au moins au nombre d'un, ayant une section transversale plus grande que l'extrémité avant supérieure (56) et dépassant de l'extrémité avant supérieure (56) du corps de milieu filtrant (50) avec un segment saillant (64), et
le segment saillant (64) de l'élément de cadre latéral (60) formant une zone d'étanchéité entre l'élément filtrant (10, 30) et le boîtier (102) à l'extérieur de l'extrémité avant supérieure (56) et est pincé entre une structure de support (106) de la base de montage (110) et un contre-élément (108) du couvercle de boîtier (104) lorsque le boîtier (102) est dans un état fermé.

2. Purificateur d'air ambiant selon la revendication 1, dans lequel le ventilateur (150) a un axe de rotation vertical (152),
dans lequel l'entrée d'écoulement (142), au moins au nombre d'une, est disposée radialement par rapport à l'axe de rotation (152) du ventilateur (150), et
dans lequel la sortie (144), au moins au nombre d'une, est disposée axialement par rapport à l'axe de rotation (152) du ventilateur (150).

3. Purificateur d'air ambiant selon la revendication 1 ou 2, dans lequel l'élément filtrant (10, 30), au moins au nombre d'un, entoure au moins partiellement, en particulier circonférentiellement, un espace intérieur d'air pur (160) du boîtier (102), et
dans lequel, de préférence, le ventilateur (150) est décalé axialement par rapport à la base de montage (110) du boîtier (102) et est en communication fluidique avec l'espace intérieur d'air pur (160) et/ou l'élément filtrant (10, 30), au moins au nombre d'un, s'étend essentiellement parallèlement à l'axe de rotation (152) du ventilateur (150).

4. Purificateur d'air ambiant selon l'une quelconque des revendications précédentes, dans lequel un deuxième élément de cadre latéral (61) est prévu sur au moins une extrémité avant inférieure (58) de l'élément filtrant (10, 30), au moins au nombre d'un, opposée à l'extrémité avant supérieure (56), ayant une section transversale plus grande que l'extrémité avant inférieure (58) et faisant saillie au-delà de l'extrémité avant inférieure (58) du corps de milieu filtrant (50) avec un segment saillant (65).

5. Purificateur d'air ambiant selon l'une quelconque des revendications précédentes, comprenant en outre une multitude de segments d'éléments filtrants (15, 17, 19, 21, 23, 25, 27, 29) de l'élément filtrant (10), au moins au nombre d'un, adjacents les uns aux autres sur la circonférence,
dans lequel la multitude de segments d'éléments filtrants (15, 17, 19, 21, 23, 25, 27, 29) est disposée en forme polygonale ou circulaire autour de l'axe de rotation (152) du ventilateur (150).

6. Purificateur d'air ambiant selon la revendication 5, dans lequel le segment saillant (64) du premier élément de cadre latéral (60) est pincé le long d'une ligne de pincement circonférentielle (78) de chacun des multiples segments d'élément filtrant (15, 17, 19, 21, 23, 25, 27, 29).

7. Purificateur d'air ambiant selon l'une quelconque des revendications précédentes, dans lequel le couvercle de boîtier (104) est pourvu d'une structure rainurée saillant axialement (121) pour recevoir l'extrémité avant supérieure (56) de l'élément filtrant (10, 30), au moins au nombre d'un, et/ou les segments d'élément filtrant (15, 17, 19, 21, 23, 25, 27, 29) avec l'élément de cadre latéral (60), en particulier dans lequel la structure rainurée (121) reçoit l'élément complémentaire (108) destiné à pincer le segment saillant (64) de l'élément de cadre latéral (60) lorsque le boîtier (102) est fermé.

8. Purificateur d'air ambiant selon l'une quelconque des revendications précédentes, dans lequel l'élément de cadre latéral (60, 61) est une bande latérale ou une bande frontale de l'élément filtrant (10, 30), au moins au nombre d'un.

9. Purificateur d'air ambiant selon l'une quelconque des revendications précédentes, comprenant en outre des segments d'élément filtrant (32, 34) de l'élément filtrant (30), au moins au nombre d'un,
dans lequel les segments d'élément filtrant (32, 34) sont disposés en parallèle sur des côtés opposés de l'axe de rotation (152) du ventilateur (150).

10. Purificateur d'air ambiant selon l'une quelconque des revendications précédentes, dans lequel une extension longitudinale des plis du corps de milieu filtrant (50) est disposée parallèlement à l'axe de rotation (152) du ventilateur (150).

11. Purificateur d'air ambiant selon l'une quelconque des revendications précédentes,
dans lequel l'élément filtrant (10, 30), au moins au nombre d'un, couvre au total une section angulaire d'au moins 270°, de préférence d'au moins 330°, de la circonférence de l'espace intérieur d'air pur (160).

12. Purificateur d'air ambiant selon l'une quelconque des revendications précédentes,
dans lequel l'un de l'élément filtrant (10, 30), au moins au nombre d'un, est disposé de manière essentiellement coaxiale à l'axe de rotation (152) du ventilateur (150).

13. Purificateur d'air ambiant selon l'une quelconque des revendications précédentes, dans lequel au moins l'un de l'élément filtrant (10, 30), au moins au nombre d'un, est disposé de manière concentrique autour d'un centre de l'espace intérieur d'air pur (160), et
dans lequel le centre de l'espace intérieur d'air pur (160) est défini par l'axe de rotation (152) du ventilateur (150).

14. Purificateur d'air ambiant selon l'une quelconque des revendications précédentes, dans lequel le ventilateur (150) est maintenu par une structure de support (156) fixée à la base de montage (110), et
dans lequel, de préférence, la structure de support (156) comprend au moins une entretoise (157), s'étendant de préférence perpendiculairement à un plan de la base de montage (110), en particulier, dans lequel la structure de support (156) est conçue sous la forme d'une cage de support ayant une multitude d'entretoises (157) réparties angulairement autour de la circonférence.

15. Purificateur d'air ambiant selon la revendication 14, dans lequel la structure de support (156) agit comme un support radial pour l'élément filtrant (10, 30), au moins au nombre d'un.

16. Purificateur d'air ambiant selon l'une quelconque des revendications précédentes, dans lequel la paroi de couvercle supérieure (120) inclut au moins une ouverture (122) qui sert de sortie d'écoulement (144), et
dans lequel, de préférence, le diamètre de l'ouverture (122) correspond au diamètre du ventilateur (150).

17. Utilisation d'un élément filtrant (10, 30) dans un purificateur d'air ambiant (100) montable dans un véhicule selon l'une quelconque des revendications précédentes, pour purifier l'air ambiant, l'élément filtrant (10, 30) comprenant au moins un corps de milieu filtrant (50), en particulier sous la forme d'un soufflet de filtre plissé (52),
dans lequel au moins un premier élément de cadre latéral (60), en particulier un élément de cadre latéral plan, est prévu sur au moins une extrémité avant supérieure (56) de l'élément filtrant (10, 30), ayant une section transversale plus grande que l'extrémité avant supérieure (56) et dépassant au-delà de l'extrémité avant supérieure (56) du corps de milieu filtrant (50) avec un segment saillant (64), et
dans lequel le segment saillant (64) de l'élément de cadre latéral (60) forme une zone d'étanchéité à l'extérieur de l'extrémité, au moins au nombre d'un, avant supérieure (56).
